# EUROPÄISCHE PATENTSCHRIFT

(11) **EP 4 049 741 B1**
(45) Veröffentlichungstag und Bekanntmachung des Hinweises auf die Patenterteilung: **18.10.2023**
(21) Anmeldenummer: 22156051.9
(22) Anmeldetag: 10.02.2022
(51) Int. Cl.: B01D 46/04, B01D 46/24, B01D 46/71

(54) **REINIGUNGSVORRICHTUNG FÜR EIN INDUSTRIELLES STAUBFILTER**
CLEANING DEVICE FOR AN INDUSTRIAL DUST FILTER
DISPOSITIF DE NETTOYAGE POUR UN FILTRE À POUSSIÈRES INDUSTRIEL

(30) Priorität: 24.02.2021 DE 102021104429
(43) Veröffentlichungstag der Anmeldung: 31.08.2022
(73) Patentinhaber: Green Process Engineering GmbH, 24941 Flensburg (DE)
(72) Erfinder: Schenk, Lothar, 45525 Hattingen (DE)
(74) Vertreter: Janke Scholl Patentanwälte PartG mbB

(56) Entgegenhaltungen:
- AU-A1- 2006 200 263
- DE-A1-102008 048 589
- US-A- 4 302 228
- US-A- 5 180 110

## Beschreibung

Die Erfindung betrifft ein industrielles Staubfilter, welches sich aus in einer Filterkammer angeordneten, rohrförmigen und an einem Ende mit einer Öffnung versehenen Filterelementen zusammensetzt, und mit einer Reinigungsvorrichtung.

Derartige Reinigungsvorrichtungen finden bei industriellen Staubfiltern Verwendung, wie sie z. B. aus der US 6,022,388, der DE 36 18 020 A1 oder der DE 103 20 486 A1 bekannt sind. In einem Filtergehäuse des Staubfilters ist eine Vielzahl zueinander paralleler Filterelemente wie z. B. Filterschläuche oder Filterrohre vertikal angeordnet. Ein horizontaler Trennboden trennt den Staubluftraum des Filters von dessen Reinluftraum. Die Filterelemente ragen unter ihrem Eigengewicht in den unten angeordneten Staubluftraum, so dass sie von außen nach innen von dem staubhaltigen, zu filtrierenden Gas, z. B. Luft, durchströmt werden. Um ein Zusammendrücken der Filterelemente durch den Differenzdruck zu vermeiden, befindet sich in jedem Filterelement ein in der Regel aus Stahldraht hergestellter Stützkorb. An ihrem oberen Ende sind die Filterelemente offen, so dass sie mit dem Reinluftraum oberhalb des Trennbodens in Verbindung stehen. Üblicherweise wird der Reinluftraum mit einem geringeren Druck betrieben, als der Staubluftraum.

Die Filterelemente müssen häufig gereinigt werden, da sie sich nach einer gewissen Betriebsdauer an ihrer Außenseite zusetzen. Eine weitverbreitete Methode der Reinigung besteht darin, in Umkehrung der Filtrierrichtung Druckluft impulsartig über die oben angeordneten Öffnungen in die einzelnen Filterelemente einzublasen, wodurch der außen an den Filterelementen haftende Filterstaub bzw. Filterkuchen abplatzen kann, und in einen unterhalb angeordneten Sammler fällt.

Zur Erzeugung des für die Reinigung verwendeten Druckluftimpulses sind oberhalb der Filterelemente nach unten gerichtete Düsen angeordnet. Mehrere in Reihe angeordnete und jeweils einem Filterelement zugeordnete Düsen sind an ein gemeinsames Düsenrohr angeschlossen, welches mit der für die Reinigung erforderlichen Druckluft versorgt wird. Das insoweit einen Verteiler bildende Düsenrohr ist hierzu über ein schnell schaltendes Ventil mit einem Druckluftspeicher verbindbar. Durch das fast schlagartige Öffnen des Ventils gelangt Druckluft zunächst in das Düsenrohr, und dann über die daran seitlich ansetzenden Düsen von oben her in die Filterelemente.

Industrielle Staubfilter mit solchen Düsenrohren sind zum Beispiel aus der US 5,180,110 und der DE 10 2008 048 589 A1 bekannt. Die Düsenrohre weisen nur an jenem Ende, an dem sie mit der für die Reinigung erforderlichen Druckluft versorgt werden, einen offenen Rohrquerschnitt auf. An dem anderen Ende hingegen reduziert sich der Rohrquerschnitt bis zum vollständigen Verschluss, wodurch hier kein Druckluftaustritt möglich ist und alle Druckluft nur über die Düsen austreten kann. Die Reduzierung des Rohrquerschnitts ist technisch so gelöst, dass sie zugleich zu der Ausbildung einer Platte in Verlängerung des Düsenrohrs führt. Die Platte greift in einen korrespondierend gestalteten Schlitz, wodurch eine Drehlage des Düsenrohrs sichergestellt ist, bei der die Düsen exakt auf die Filterelemente ausgerichtet sind. Bei dem Staubfilter nach der US 5,180,110 dient die in Verlängerung des Düsenrohrs angeordnete Platte zugleich dazu, unter Einsatz eines Spannnockens, welcher sich gegen den stirnseitigen Rand der Platte abstützt, die Längsposition des Düsenrohrs zu sichern.

Weitere Staubfilter mit darin zu Reinigungszwecken angeordneten Düsenrohren sind aus der US 4, 302,228 und der AU 2006 200 263 A1 bekannt.

Die für die Reinigung verwendeten Drücke sind beträchtlich, was besonders das Düsenrohr mit den daran angeordneten Düsen und Dichtflächen belastet. Außerdem gelangen während des Betriebs feinste Staubpartikel in das Düsenrohr. Diese setzen sich teilweise so an der Innenwand fest, dass sie mit den Druckluftpulsen nicht wieder vollständig herausgeblasen werden. Vor allem beim Einsatz des Staubfilters in der Lebensmittelindustrie kann dadurch ein Hygieneproblem entstehen. Daher ist von Zeit zu Zeit eine Kontrolle und evtl. Reinigung dieser Bauteile notwendig, wozu diese aus- und später wieder eingebaut werden müssen. Außerdem kann eine Demontage des Düsenrohrs erforderlich werden, um von oben her an eines der darunter angeordneten Filterelemente zu gelangen. In allen diesen Fällen ist der Aufwand für die Demontage und spätere erneute Montage hoch.

Der Erfindung liegt daher die **Aufgabe** zugrunde, bei einem Staubfilter die im Rahmen der Druckluftreinigung erforderlichen Bauteile montage- und wartungsfreundlich zu gestalten.

Zur **Lösung** dieser Aufgabe wird ein Staubfilter mit den Merkmalen des Anspruchs 1 vorgeschlagen.

Bestandteil der Reinigungsvorrichtung des Staubfilters sind in die Filterelemente gerichtete Düsen, wobei mehrere der Düsen an ein gemeinsames Düsenrohr angeschlossen sind, welches ventilgesteuert mit einer Druckluftquelle verbindbar ist. Das Düsenrohr erstreckt sich mit seiner Rohrachse zwischen zwei Wänden des Staubfilters. Diese Wände können die Behälterwände des Filtergehäuses sein oder können senkrechte Zwischenwände sein, welche den Innenraum des Filtergehäuses in Zonen unterteilen oder welche das Filtergehäuse nur aussteifen.

Ein erster Endabschnitt des Düsenrohrs ist mit seiner Innen- oder Außenseite an einer ersten Rohraufnahme radial abgestützt, die an einer der beiden Wände befestigt ist. Ein zweiter, also der andere Endabschnitt des Düsenrohrs ist mit seiner Innen- oder Außenseite an einer zweiten Rohraufnahme radial abgestützt. Diese zweite Rohraufnahme befindet sich im Bereich der anderen der beiden Wände.

Erfindungsgemäß ist die Länge des Düsenrohrs geringer als der auf der Rohrachse gemessene und damit betrachtete Abstand zwischen den beiden bezüglich des Filtergehäuses ortsfesten Rohraufnahmen. Die Länge des Düsenrohrs ist andererseits größer als der kürzeste Abstand zwischen den beiden Rohraufnahmen. Daher sind die Endabschnitte des Düsenrohrs und die jeweilige Rohraufnahme in Richtung der Rohrachse zueinander verschieblich ausgebildet. Das Düsenrohr und die Rohraufnahmen sind insbesondere so gestaltet, dass das Düsenrohr, geführt durch die Rohraufnahmen, immer dann längs seiner Rohrachse hinherbeweglich ist, wenn eine später noch beschriebene Verriegelung nicht aktiviert ist.

In unverriegeltem Zustand ist das Düsenrohr daher in Richtung seiner Rohrachse nicht starr befestigt, sondern verschiebbar. Dies schafft die Voraussetzung für eine besonders einfache und damit wartungsfreundliche Montage und Demontage des Düsenrohrs, etwa im Rahmen von Reparatur- oder Wartungsarbeiten. Voraussetzung ist, dass die auf der Rohrachse gemessene und damit betrachtete Länge des Düsenrohrs geringer ist, als der Abstand zwischen den beiden Wänden und zugleich größer ist, als der kürzeste Abstand zwischen der ersten und der zweiten Rohraufnahme.

Zur Demontage des Düsenrohrs wird dieses zunächst soweit in Richtung seines einen Rohrendes geschoben, bis das andere Rohrende von seiner Rohraufnahme freikommt. Sodann wird das Düsenrohr an dem so freigekommenen Rohrende etwas zur Seite bewegt, und lässt sich dann durch eine entgegengesetzte Längsbewegung vollständig auch von der gegenüberliegenden Rohraufnahme entfernen.

Für diese Art der Demontage, und gleichermaßen für eine spätere erneute Montage, ist kein Werkzeug erforderlich. Vielmehr reicht es aus, das Düsenrohr an einem seiner Enden zu ergreifen und durch einerseits Längsverschieben und durch andererseits Seitwärtsschwenken zunächst an seinem einen und dann auch an seinem anderen Rohrende zu lösen.

In korrekt eingebautem Zustand ist es erforderlich, das Düsenrohr in seiner so eingenommenen Position zu sichern, also in Längsrichtung der Rohrachse, aber auch in Drehrichtung. Hierzu ist eine Ausgestaltung gekennzeichnet durch ein lösbares Sperrelement zur Sicherung zumindest der Verschiebeposition des Düsenrohrs.

Es ist nicht notwendig, Sperrelemente an beiden Endabschnitten des Düsenrohrs vorzusehen. Vielmehr ist es bereits ausreichend und montagetechnisch von Vorteil, wenn ein Sperrelement nur an einem der beiden Endabschnitte des Düsenrohrs angeordnet ist, also nur dieses Rohrende gegen Längsverschieben und vorzugsweise auch gegen Verdrehen gesichert wird. Vorzugsweise befindet sich das Sperrelement nur an dem der Druckluftzufuhr abgewandten Ende des Düsenrohrs. Denn allein von diesem Ende her erfolgt auch die Demontage und spätere erneute Montage des Düsenrohrs.

Neben der Sicherung der Verschiebeposition des Düsenrohrs ist auch die Sicherung der Drehlage des Düsenrohrs wichtig. Denn nur in einer bestimmten Drehlage ist gewährleistet, dass die Düsen korrekt zu den zu reinigenden Filterelementen ausgerichtet sind. Daher ist zur Sicherung der Drehlage des Düsenrohrs vorgesehen, dass ein an dem Sperrelement ausgebildeter Sicherungsabschnitt in eine Sperrstruktur an der jeweiligen Rohraufnahme formschlüssig eingreift. Vorzugsweise befinden sich sowohl der Sicherungsabschnitt als auch die Sperrstruktur innerhalb des Düsenrohrs.

Die Sperrstruktur kann z. B. eine Nut oder eine Kerbe an der dem Düsenrohr zugewandten Stirnseite der Rohraufnahme sein.

Das Sperrelement insgesamt ist vorzugsweise als eine federelastische Spange gestaltet. In diesem Fall ist der die korrekte Drehlage des Düsenrohrs gewährleistende Sicherungsabschnitt ein quer zu der Rohrachse durch das Düsenrohr führender Abschnitt der Spange.

Zur Sicherung der Verschiebeposition des Düsenrohrs wird vorgeschlagen, dass das Sperrelement mit einem ersten Eingriffsbereich an dem Endabschnitt des Düsenrohrs festgelegt und mit einem zweiten Eingriffsbereich an der Rohraufnahme lösbar verriegelt ist.

Wenn das Sperrelement einschließlich der Eingriffsbereiche als eine federelastische Spange gestaltet ist, ist weder bei der Montage, noch bei der Demontage des Düsenrohrs spezielles Werkzeug oder überhaupt Werkzeug erforderlich.

Zur Sicherung der Verschiebeposition des Düsenrohrs wird ferner vorgeschlagen, dass der erste Eingriffsbereich des Sperrelements in mindestens einer Öffnung in der Wandung des Düsenrohrs festgelegt und der zweite Eingriffsbereich in einer an der Rohraufnahme ausgebildeten Befestigungsstruktur verriegelt ist.

Gemäß einer bevorzugten Ausgestaltung des Sperrelements ist der erste Eingriffsbereich zweigeteilt, wobei die beiden Teile in unterschiedlichen Öffnungen in der Wandung des Düsenrohrs festgelegt sind, und wobei die Mittelachsen dieser Öffnungen versetzt zueinander angeordnet sind. Durch den Versatz und vorzugsweise auch aufgrund der Formgestaltung des Sperrelements steht das Sperrelement, welches vorzugsweise als eine federelastische Spange gestaltet ist, unter einer Vorspannung. Erreicht wird eine zuverlässige und trotzdem einfach lösbare Längsfixierung des Düsenrohrs an der Rohraufnahme.

Die an der Rohraufnahme ausgebildete Befestigungsstruktur ist vorzugsweise auf einem Längsabschnitt der Rohraufnahme ausgebildet, der sich zwischen der Stirnseite des Düsenrohrs und der Wand befindet. Die Befestigungsstruktur ist zum Beispiel eine Umfangsnut an der Rohraufnahme. In diese Umfangsnut greift, in verriegeltem Zustand, ein zum Teil korrespondierend gestalteter Bügelabschnitt der federelastischen Spange formschlüssig ein.

Hinsichtlich der das Düsenrohr fixierenden Rohraufnahme wird vorgeschlagen, dass diese an einem Einsatzkörper ausgebildet ist, der in einer Öffnung in der Wand sitzt. Diese Wand kann die Außenwand des Staubfilters sein oder eine Zwischenwand, welche den Innenraum des Filtergehäuses in Zonen unterteilt oder welche das Filtergehäuse verstärkt.

Bei dem Staubfilter kann es konstruktionstechnisch vorteilhaft sein, wenn die eine der beiden Wände, zwischen denen sich das Düsenrohr erstreckt, eine zentral in dem Staubfilter angeordnete Wand mit senkrechten Wandflächen ist, und wenn Düsenrohre zu beiden Seiten dieser Wand angeordnet sind. Daher ist an dem Einsatzkörper auf der der ersten Rohraufnahme abgewandten Seite der Wand eine weitere Rohraufnahme für ein weiteres Düsenrohr ausgebildet, wobei die weitere Rohraufnahme spiegelbildlich zu der ersten Rohraufnahme gestaltet ist. Es werden also an einem einzigen Einsatzkörper gleich zwei Düsenrohre sicher fixiert.

Vorzugsweise setzt sich der Einsatzkörper zusammen aus den einander abgewandten Rohraufnahmen und einem zwischen ihnen angeordneten Mittelabschnitt, wobei sich der Mittelabschnitt seinerseits zusammensetzt aus einem in der Öffnung in der Wand sitzenden zylindrischen Längsabschnitt und einem gegen die Wand axial abgestützten Flanschabschnitt.

Zur radialen Abstützung des jeweiligen Endes des Düsenrohrs kann die entsprechende Rohraufnahme entweder als Kappe gestaltet sein, also den Endabschnitt des Düsenrohrs an dessen Außenseite radial abstützen. Bevorzugt wird jedoch die umgekehrte Ausgestaltung, bei der sich die Rohraufnahme nach Art eines Zapfens oder einer Muffe in den Endabschnitt des Düsenrohrs hinein erstreckt und dieses daher von innen radial stützt. Eine besonders bevorzugte Ausgestaltung sieht daher vor, dass der erste Endabschnitt des Düsenrohrs mit seiner Innenseite an der ersten Rohraufnahme radial abgestützt ist.

Nachfolgend wird anhand verschiedener Abbildungen ein Ausführungsbeispiel näher erläutert. Es zeigen:
- Fig. 1:: in einem stark vereinfachten Vertikalschnitt ein Staubfilters mit einer Vielzahl darin angeordneter, schlauchartiger Filterelemente;
- Fig. 2:: eine Draufsicht in Höhe des Reinluftraums auf das Staubfilter, wobei die Schnittebene oberhalb eines Trennbodens liegt, welcher den Reinluftraum von dem darunter befindlichen Staubluftraum trennt;
- Fig. 3:: in einem Teillängsschnitt entlang der in Fig. 2 bezeichneten Rohrachse A den Bereich des einen Endes eines Düsenrohres, mit einer das Düsenrohrende an einer wandfesten Rohraufnahme verriegelnden Spange;
- Fig. 4a:: eine perspektivische Teilansicht desselben Endes des Düsenrohrs, wobei die Spange hier in einer zweiten Ausführungsform wiedergegeben ist;
- Fig. 4b:: die Gegenstände wie in Fig. 4a, hier in einer etwas anderen Perspektive;
- Fig. 5:: in einer weiteren perspektivischen Teilansicht das wandnah gelegene Ende des Düsenrohres mit Spange, wobei die Spange in ihrer das Düsenrohr an der Rohraufnahme verriegelnden Stellung wiedergegeben ist.

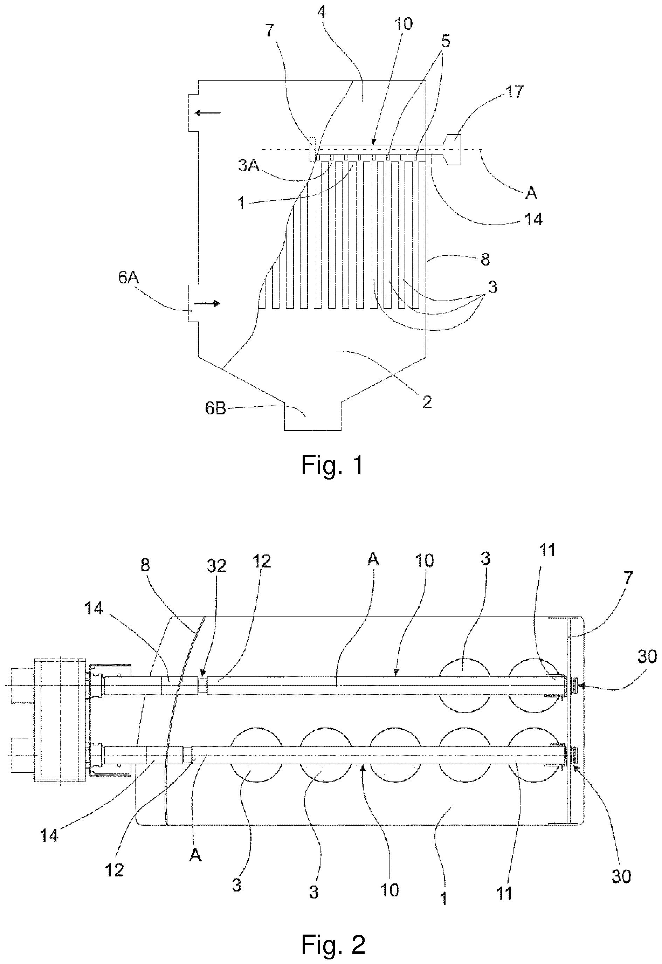

Der hier beschriebene und in Figur 1 bis 6 dargestellte Staubfilter für den industriellen Einsatz z. B. in der Milch verarbeitenden Industrie besteht primär aus einem vertikal bauenden Filtergehäuse mit einer vorzugsweise zylindrischen Wand 8, die einen Filterraum mit einer Vielzahl darin angeordneter Filterelemente 3 umschließt. Ein horizontaler Trennboden 1 unterteilt den Filterraum in einen unten liegenden Staubgasraum 2 und einen oben liegenden Reingasraum 4. Der Trennboden 1 ist ähnlich einem Rohrboden und verfügt über eine Vielzahl vorzugsweise runder Öffnungen für darin vertikal eingesetzte, langgestreckte Filterelemente 3. Bei den Filterelementen 3 handelt es sich um aus rohrähnlich oder taschenähnlich geformtem oder gefaltetem Filtermaterial bestehende Elemente. Die Filterelemente können im Inneren durch Stützkörbe verstärkt sein. Sie sind an ihrem unteren Ende verschlossen und weisen an ihrem oberen Ende in Höhe des Trennbodens 1 eine Öffnung 3A in den Reingasraum 4 auf.

Die Filterelemente 3 sind von oben her in die Öffnungen des Trennbodens 1 einhängbar. Die wirksame Filterfläche wird primär durch die Mantelflächen der Filterelemente gebildet.

Über einen Eintrittsstutzen 6A in der Wand 8 gelangt staubhaltiges Gas oder staubhaltige Luft in den Staubgasraum 2. Der enthaltene Staub bleibt an den Außenseiten der Filterelemente 3 haften. Die Filterelemente 3 müssen daher von Zeit zu Zeit gereinigt und damit regeneriert werden. Hierzu befinden sich oberhalb der Öffnungen 3A Düsen 5 eines Druck- Impuls- Injektorsystems. Kurzzeitig wird über die Düsen 5 ein starker Luftstrahl von oben her in die Öffnungen 3A der Filterelemente 3 abgegeben, wodurch die Filterelemente von dem an ihren Außenflächen ausfiltrierten Staub oder dem staubhaltigen Produkt gereinigt werden. Der Staub sammelt sich unten im Filtergehäuse, wozu dort ein Staubaustrag 6B angeordnet ist. Das gereinigte Gas verlässt das Filter in Höhe des Reingasraums 4.

Mehrere Düsen 5, wobei jeweils eine Düse 5 einem darunter angeordneten Filterelement 3 zugeordnet ist, befinden sich in Reihe zueinander an einem gemeinsamen Düsenrohr 10. Zur Bereitstellung der Düsen 5 können in einer einfachsten Ausgestaltung die Düsenrohre 10 mit entsprechenden radialen Öffnungen und damit Düsen versehen sein, welche jeweils auf das darunter angeordnete Filterelement 3 ausgerichtet sind. Bei dem hier beschriebenen Ausführungsbeispiel hingegen sind die Düsen 5 kurze, buchsenartige Aushalsungen, deren Achsen radial zu der zentralen Rohrachse A des Düsenrohrs 10 ausgerichtet sind.

Jedes der parallel zueinander in dem Filtergehäuse angeordneten Düsenrohre 10 erstreckt sich zwischen einer vertikalen Wand 8, welche hier zugleich die Außenwand des Filtergehäuses ist, und einer weiteren vertikalen Wand 7, welche hier eine das Filtergehäuse nach Art eines Querträgers verstärkende Innenwand ohne raumtrennende Funktion ist.

Die Fig. 2 zeigt beispielhaft zwei der Düsenrohre 10 einschließlich ihrer jeweiligen Befestigung im Bereich einerseits der Außenwand 8 und andererseits der Wand 7. Die Düsenrohre 10 sind von solcher Länge, dass sie sich über zugleich mehrere Filterelemente 3 hinüber erstrecken, so dass die unten an den Düsenrohren 10 angeordneten Düsen von oben her Druckluft in die Filterelemente 3 einblasen können.

Fig. 2 lässt auch erkennen, dass nicht alle Düsenrohre 10 von gleicher Länge sind, da der kreisförmige Grundriss des Staubfilters bedingt, dass die Düsenrohre 10, von der Mitte des Staubfilters ausgehend, zunehmend kürzer werden. Der Aufbau der einzelnen Düsenrohre 10 ist jedoch, bis auf ihre Länge und die Zahl der daran ausgebildeten Düsen 5, gleich.

Eines der beiden Enden jedes Düsenrohrs 10 ist innerhalb des Filtergehäuses an einen Rohrstutzen angeschlossen. Der Rohrstutzen bildet eine Rohraufnahme 32 für den betreffenden Endabschnitt 12 des Düsenrohrs 10 und ist Bestandteil einer Druckluftzufuhr 14. Die Druckluftzufuhr 14 ist eine in das Filtergehäuse ragende und hierzu durch die Wand 8 des Filtergehäuses führende Strömungsverbindung, welche das Düsenrohr 10 über ein schnell schaltendes Ventil, welches sich außerhalb des Filtergehäuses befindet, mit einem Druckluftbehälter 17 verbindet, der sich ebenfalls außerhalb des Filtergehäuses befindet.

Die Düsenrohre 10 selbst sind innen und außen glatte zylindrische Rohre, die an ihrem ersten Endabschnitt 11 in einer zu der Rohrachse A rechtwinkligen ersten Stirnseite, und auch an ihrem zweiten Endabschnitt 12 in einer zu der Rohrachse A rechtwinkligen zweiten Stirnseite enden.

Da die Rohraufnahmen 32 zylindrische Rohrstutzen sind, ist eine Anpassung der Endabschnitte 12 an den dort gebogenen Verlauf der Wand 8 nicht erforderlich. Der in Fig. 2 links dargestellte zweite Endabschnitt 12 des Düsenrohrs ist auf die als offener Rohrstutzen gestaltete Rohraufnahme 32 aufgesteckt, die wiederum Bestandteil der Druckluftzufuhr 14 ist. Die Rohraufnahme 32 ist hierzu von etwas geringerem Durchmesser als der Durchmesser des Düsenrohrs 10, so dass der zweite Endabschnitt 12 des Düsenrohrs mit seinem Innenmantel auf dem Außenmantel der Rohraufnahme 32 sitzt, ohne allerdings aufgepresst zu sein. Zwischen beiden kann allerdings eine Dichtung angeordnet sein, vorzugsweise ein O-Ring.

Auch der gegenüberliegende erste Endabschnitt 11 des Düsenrohrs 10 stützt sich mit seinem Innenmantel auf einer Rohraufnahme ab, hier der ersten Rohraufnahme 31. Die erste Rohraufnahme 31 befindet sich an einem in der Wand 7 befestigten Einsatzkörper 30. Anders als die zweite Rohraufnahme 32 ist die erste Rohraufnahme 31 kein Rohrstutzen, weshalb Druckluft nur an der zweiten Rohraufnahme 32 in das Düsenrohr 10 einströmen kann, hingegen über den ersten Endabschnitt 11 und die erste Rohraufnahme 31 keinerlei Druckluft entweichen kann. Vielmehr tritt Druckluft ausschließlich über die Düsen 5 aus. Beide Rohraufnahmen 31, 32 sind im Wesentlichen starr gegenüber der jeweiligen Wand 7 bzw. 8.

Für ein vollständiges Demontieren des Düsenrohrs 10 sind keine Änderungen an den Rohraufnahmen 31, 32 erforderlich. Dies gelingt, indem das Düsenrohr 10 in Längsrichtung seiner Rohrachse A nicht starr befestigt ist, sondern das Düsenrohr in Richtung der Rohrachse A grundsätzlich verschiebbar gestaltet ist. Diese schafft die Voraussetzung für eine besonders einfache und damit wartungsfreundliche Montage und Demontage des Düsenrohrs 10.

Dies gelingt, indem die auf der Rohrachse A gemessene bzw. betrachtete Länge des Düsenrohrs 10 geringer ist, als der Abstand zwischen den beiden Wänden 7, 8 und zugleich größer ist, als der kürzeste Abstand zwischen den beiden Rohraufnahme 31, 32.

Die händische Demontage des Düsenrohrs 10 erfolgt vollständig im Bereich des ersten Endabschnitts 11, also von der Wand 7 aus. Dazu wird das Düsenrohr 10 zunächst auf der Achse A soweit in Richtung zu der zweiten Rohraufnahme 32 hin geschoben, bis der erste Endabschnitt 11 von der zapfenförmig gestalteten Rohraufnahme 31 freikommt. Sodann wird das Düsenrohr an dem ersten Endabschnitt 11 etwas zur Seite bewegt, und lässt sich dann durch eine entgegengesetzte Längsbewegung vollständig auch von der gegenüberliegenden Rohraufnahme 32 abziehen. Für diese Art der Demontage, und analog für die spätere umgekehrte Montage des Düsenrohrs, ist kein Werkzeug erforderlich. Vielmehr reicht es aus, das Düsenrohr 10 im Bereich seines ersten Endabschnitts 11 zu ergreifen und durch Längsverschieben und durch zur Seite schwenken zunächst an dem einen und dann an dem anderen Rohrende zu lösen. Alle diese Arbeiten können im Bereich der Wand 7 erfolgen, so dass bei der Montage und Demontage keine weitere Person im Bereich der Wand 8 helfen muss.

Im korrekt eingebauten Zustand, wie in Fig. 2 wiedergegeben, muss das Düsenrohr 10 in der so eingenommenen Position gesichert werden, und zwar in Richtung der Rohrachse A und auch in Drehrichtung. Denn nur bei einer bestimmten Drehlage ist gewährleistet, dass die Düsen 5 korrekt zu den Filterelementen 3 ausgerichtet sind.

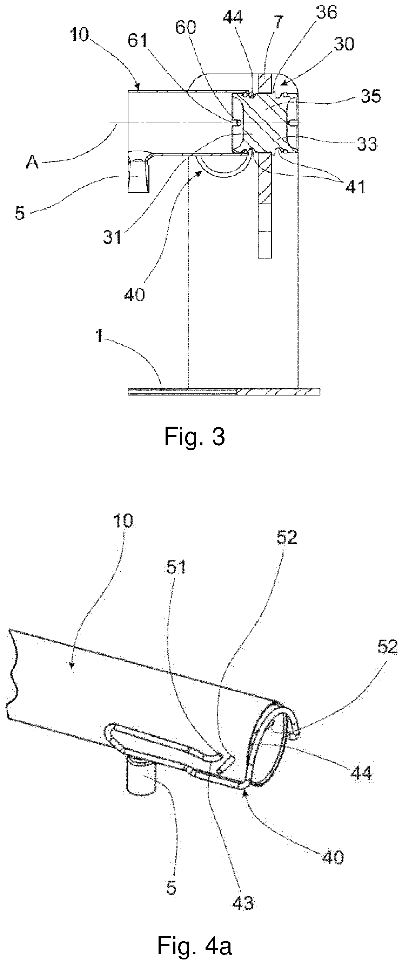

Gemäß Figur 3 erfolgt die Sicherung des vorläufig lagerichtig eingebauten Düsenrohrs 10 in Längs- und in Drehrichtung ausschließlich im Bereich der Wand 7 und damit im Bereich des ersten Endabschnitts 11 des Düsenrohrs. Beide Sicherungen werden durch ein- und dasselbe Sperrelement in Gestalt einer Spange 40 aus Federdraht erreicht. Die Spange 40 ist dazu ausgebildet, einerseits in das Düsenrohr 10 einzugreifen, und andererseits in der ersten Rohraufnahme 31 zu verriegeln.

Die erste Rohraufnahme 31 ist, ebenso wie eine spiegelbildlich angeordnete weitere Rohraufnahme 33, an dem bereits erwähnten Einsatzkörper 30 ausgebildet. Der Einsatzkörper 30 setzt sich zusammen aus den beiden Rohraufnahmen 31, 33 und einem zwischen ihnen angeordneten Mittelabschnitt. Der Mittelabschnitt wiederum setzt sich zusammen aus einem in einer zylindrischen Öffnung in der Wand 7 sitzenden, zylindrischen Längsabschnitt 35 und einem axial gegen die Wand 7 abgestützten Flanschabschnitt 36. Der Flanschabschnitt 36 bildet einen Anschlag, der für den korrekten Längssitz des Einsatzkörpers 30 in der Wand 7 sorgt.

Die weitere Rohraufnahme 33 ist zu der ersten Rohraufnahme 31 spiegelbildlich gestaltet und sie dient zur Halterung und Befestigung eines weiteren Düsenrohrs auf der anderen Seite der Wand 7. Es sind also, bei Bedarf, zwei zueinander fluchtende Düsenrohre 10 gleichzeitig an dem Einsatzkörper 30 fixierbar.

Die Rohraufnahme 31 ist, ebenso wie die weitere Rohraufnahme 33, zapfenförmig gestaltet und ragt über eine gewisse Länge in den ersten Endabschnitt 11 des Düsenrohrs 10. Der erste Endabschnitt 11 stützt sich daher radial an der ersten Rohraufnahme 31 ab. Vorzugsweise ist die erste Rohraufnahme 31 auf der Länge des ersten Endabschnitts 11 mit einer umlaufenden Nut versehen, in der ein O-Ring Aufnahme findet, so dass dieser die Innenwand des Düsenrohrs 10 gegen die Außenseite der ersten Rohraufnahme 31 abdichtet.

Auf dem Längsabschnitt der Rohraufnahme 31, der sich zwischen der Stirnseite des Düsenrohrs 10 und der Wand 7 befindet, ist eine Nut ausgebildet, die sich in Umfangsrichtung erstreckt. Fertigungstechnisch günstig kann hier eine vollständig umlaufende Nut sein. Die Nut dient als Befestigungsstruktur 41 der lösbaren Verriegelung des als Spange gestalteten Sperrelements 40.

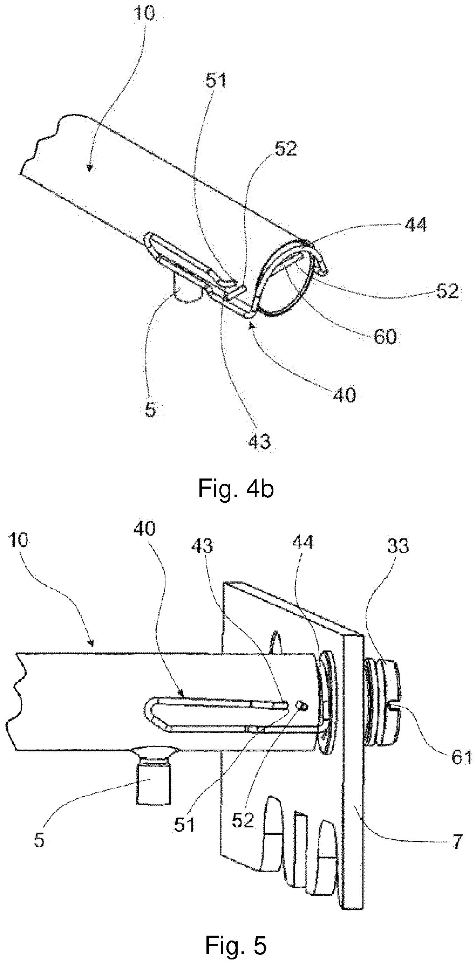

Zur Sicherung der korrekten Montageposition des Düsenrohrs 10, dargestellt in Figur 3 und 5, ist die Spange 40 mit einem ersten Eingriffsbereich 43 an dem Düsenrohr 10 festgelegt, und mit einem zweiten Eingriffsbereich 44 in der Befestigungsstruktur 41 lösbar verriegelbar. Der zweite Eingriffsbereich 44 der Spange 40 ist bügelförmig gestaltet, wobei der Bügel bogenförmig in der als Nut gestalteten Befestigungsstruktur 41 einliegt, und so die Längsposition des Düsenrohrs 10 relativ zu der Rohraufnahme 31 sichert.

Der düsenrohrseitige erste Eingriffsbereich 43 der Spange 40 ist zweigeteilt, wobei ein erster Arm des Eingriffsbereichs in einer ersten Öffnung 51, und ein zweiter Arm in einer zweiten Öffnung 52 in der Wandung des Düsenrohrs 10 festgelegt ist. Die beiden Öffnungen 51, 52 sind versetzt zueinander angeordnet, hier in Längsrichtung des Düsenrohrs 10. Diese Art der Befestigung der Spange 40 an dem Düsenrohr führt dazu, dass die Spange 40 unter Federspannung steht mit der Folge, dass der bügelförmig gestaltete zweite Eingriffsbereich 44 der Spange 40 unter leichter Federspannung in der Befestigungsstruktur 41 sitzt und darin arretiert ist.

Diese Arretierung lässt sich durch einen beiderseitigen Druck unter die Enden des bügelförmigen zweiten Eingriffsbereichs 44 aufheben und die Spange 40 in dieser entriegelten Position durch eine Kippbewegung um die Achse der Öffnung 52 schwenken und dann fixieren. Hierzu wird kein Werkzeug benötigt. Die Möglichkeit der Fixierung auch im entriegelten Zustand der Spange 40 erleichtert zusätzlich die Montage und Demontage des Düsenrohrs 10.

Das spangenförmige Sperrelement 40 ist dergestalt ausgebildet, dass es nicht nur zum Sperren in Längsrichtung dient, sondern auch zur Sicherung der Drehlage des Düsenrohrs 10.

Wie in Fig. 3 und Fig. 4b dargestellt, ist Bestandteil der aus gebogenem Draht gestalteten Spange 40 ein Sicherungsabschnitt 60, der quer zu der Rohrachse A durch das Düsenrohr 10 hindurchführt. Der Sicherungsabschnitt 60 erstreckt sich zugleich durch zwei einander abgewandte Öffnungen 52 in dem Düsenrohr 10 hindurch, und ist so unverdrehbar in Bezug auf die Rohrachse A.

Bei richtiger Drehlage des Düsenrohrs 10 greift der Sicherungsabschnitt 60 formschlüssig in eine Sperrstruktur 61 an der Rohraufnahme 31. Die Sperrstruktur 61 ist eine Nut oder Kerbe an der dem Düsenrohr zugewandten Stirnseite der Rohraufnahme 31. Sowohl der Sicherungsabschnitt 60 als auch die Sperrstruktur 61 befinden sich innerhalb des Düsenrohrs 10.

Wird daher zur Montage des Düsenrohrs 10 dieses, bei nur vorläufig montierter Spange 40, auf die erste Rohraufnahme 31 aufgeschoben, muss dabei der Sicherungsabschnitt 60 axial in die Sperrstruktur 61 hineingelangen. Gelingt dies nicht, ist die Drehlage des Düsenrohrs 10 nicht korrekt.

### Bezuaszeichenliste

| | | | |
|---|---|---|---|
| 1 | Trennboden | 30 | Einsatzkörper |
| 2 | Staubgasraum | 31 | erste Rohraufnahme |
| 3 | Filterelement | 32 | zweite Rohraufnahme |
| 3A | Öffnung | 33 | weitere Rohraufnahme |
| 4 | Reingasraum | | |
| 5 | Düse | | |
| 6A | Eintrittsstutzen | 35 | zylindrischer Längsabschnitt |
| 6B | Staubaustrag | 36 | Flanschabschnitt |
| 7 | Wand | | |
| 8 | Wand | 40 | Spange, Sperrelement |
| 9 | | 41 | Befestigungsstruktur |
| 10 | Düsenrohr | 43 | erster Eingriffsbereich |
| 11 | erster Endabschnitt | 43a | Eingriffsbereich |
| 12 | zweiter Endabschnitt | 43b | Eingriffsbereich |
| | | 44 | zweiter Eingriffsbereich |
| 14 | Druckluftzufuhr | | |
| | | 51 | Öffnung |
| 17 | Druckluftbehälter | 52 | Öffnung |
| | | 60 | Sicherungsabschnitt |
| | | 61 | Sperrstruktur |
| | | A | Rohrachse |

## Patentansprüche

1. Staubfilter, welches sich aus in einer Filterkammer angeordneten, rohrförmigen und an einem Ende mit einer Öffnung (3A) versehenen Filterelementen (3) zusammensetzt, und mit einer Reinigungsvorrichtung mit zu den Öffnungen (3A) gerichteten Düsen (5) zur Abgabe impulsartiger Druckluftstrahlen in die Filterelemente (3), wobei jeweils mehrere Düsen (5) an ein gemeinsames Düsenrohr (10) angeschlossen sind, welches ventilgesteuert mit einer Druckluftzufuhr (14) verbindbar ist und sich mit seiner Rohrachse (A) zwischen zwei Wänden (7, 8) des Staubfilters erstreckt, wobei ein erster Endabschnitt (11) des Düsenrohrs (10) mit seiner Innen- oder Außenseite an einer ersten Rohraufnahme (31) radial abgestützt ist, die an einer der beiden Wände befestigt ist, und wobei ein zweiter Endabschnitt (12) des Düsenrohrs (10) mit seiner Innen- oder Außenseite an einer zweiten Rohraufnahme (32) radial abgestützt ist, die an der anderen der beiden Wände befestigt ist, **wobei** die auf der Rohrachse (A) gemessene Länge des Düsenrohrs (10) geringer ist als der auf der Rohrachse (A) betrachtete Abstand zwischen den beiden Wänden (7, 8) und größer ist als der kürzeste Abstand zwischen den Rohraufnahmen (31, 32), wobei die Endabschnitte (11, 12) des Düsenrohrs (10) und die jeweilige Rohraufnahme (31, 32) in Richtung der Rohrachse (A) zueinander verschieblich ausgebildet sind, und mit einem lösbaren Sperrelement (40) zur Sicherung der Verschiebeposition des Düsenrohrs (10), **dadurch gekennzeichnet, dass** zur Sicherung auch der Drehlage des Düsenrohrs (10) ein an dem Sperrelement (40) ausgebildeter Sicherungsabschnitt (60) in eine Sperrstruktur (61) an der jeweiligen Rohraufnahme (31, 32) formschlüssig eingreift.

2. Staubfilter nach Anspruch 1, **dadurch gekennzeichnet, dass** nur an einem der beiden Enden des Düsenrohrs (10) das Sperrelement (40) angeordnet ist, wobei das Sperrelement (40) an dem der Druckluftzufuhr (14) abgewandten Ende des Düsenrohrs (10) angeordnet ist.

3. Staubfilter nach Anspruch 1, **dadurch gekennzeichnet, dass** sich der Sicherungsabschnitt (60) und die Sperrstruktur (61) innerhalb des Düsenrohrs (10) befinden.

4. Staubfilter nach Anspruch 1 oder 3, **dadurch gekennzeichnet, dass** die Sperrstruktur (61) eine Nut oder Kerbe an der dem Düsenrohr (10) zugewandten Stirnseite der jeweiligen Rohraufnahme (31, 32) ist.

5. Staubfilter nach einem der Ansprüche 1 - 4, **dadurch gekennzeichnet, dass** das Sperrelement (40) als eine federelastische Spange gestaltet ist, und dass der Sicherungsabschnitt (60) ein quer zu der Rohrachse (A) durch das Düsenrohr (10) führender Abschnitt der Spange ist.

6. Staubfilter nach einem der Ansprüche 1 bis 5, **dadurch gekennzeichnet, dass** zur Sicherung der Verschiebeposition des Düsenrohrs (10) das Sperrelement (40) mit einem ersten Eingriffsbereich (43) an dem Endabschnitt (11) des Düsenrohrs (10) festgelegt und mit einem zweiten Eingriffsbereich (44) an der jeweiligen Rohraufnahme (31) lösbar verriegelbar ist.

7. Staubfilter nach Anspruch 6, **dadurch gekennzeichnet, dass** das Sperrelement (40) einschließlich der Eingriffsbereiche (43, 44) als eine federelastische Spange gestaltet ist.

8. Staubfilter nach Anspruch 6 oder 7, **dadurch gekennzeichnet, dass** der erste Eingriffsbereich (43) in mindestens einer Öffnung (51, 52) in der Wandung des Düsenrohrs (10) festgelegt und der zweite Eingriffsbereich in einer an der Rohraufnahme (31) ausgebildeten Befestigungsstruktur (41) verriegelbar ist.

9. Staubfilter nach einem der Ansprüche 6 - 8, **dadurch gekennzeichnet, dass** der erste Eingriffsbereich (43) zweigeteilt ist, wobei die beiden Teile (43a, 43b) in unterschiedlichen Öffnungen (51, 52) in der Wandung des Düsenrohrs (10) festgelegt sind, und die Mittelachsen dieser Öffnungen (51, 52) versetzt zueinander angeordnet sind.

10. Staubfilter nach Anspruch 8, **dadurch gekennzeichnet, dass** die Befestigungsstruktur (41) auf einem Längsabschnitt der Rohraufnahme (31) ausgebildet ist, der sich zwischen der Stirnseite des Düsenrohrs (10) und der Wand (7) befindet.

11. Staubfilter nach Anspruch 8, **dadurch gekennzeichnet, dass** die Befestigungsstruktur (41) eine an der Rohraufnahme (31) ausgebildete Umfangsnut ist.

12. Staubfilter nach einem der vorangehenden Ansprüche, **dadurch gekennzeichnet, dass** die erste Rohraufnahme (31) an einem Einsatzkörper (30) ausgebildet ist, der in einer Öffnung (39) in der Wand (7) sitzt.

13. Staubfilter nach Anspruch 12, **dadurch gekennzeichnet, dass** an dem Einsatzkörper (30) auf der der ersten Rohraufnahme (31) abgewandten Seite der Wand (7) eine weitere Rohraufnahme (33) für ein weiteres Düsenrohr (10) ausgebildet ist, wobei die weitere Rohraufnahme (33) spiegelbildlich zu der ersten Rohraufnahme (31) gestaltet ist.

14. Staubfilter nach Anspruch 13, **dadurch gekennzeichnet, dass** sich der Einsatzkörper zusammensetzt aus den Rohraufnahmen (31, 33) und einem zwischen ihnen angeordneten Mittelabschnitt, wobei sich der Mittelabschnitt seinerseits zusammensetzt aus einem in der Öffnung (39) in der Wand (7) sitzenden zylindrischen Längsabschnitt (35) und einem gegen die Wand (7) axial abgestützten Flanschabschnitt (36).

## Claims

1. Dust filter which is composed of tubular filter elements (3) which are arranged in a filter chamber and are provided with an opening (3A) at one end, and with a cleaning device having nozzles (5), which are directed at the openings (3A), for outputting pulse-like compressed-air jets into the filter elements (3), wherein in each case a plurality of nozzles (5) are attached to a common nozzle tube (10), which is connectable under valve control to a compressed-air supply (14) and extends with its tube axis (A) between two walls (7, 8) of the dust filter, wherein a first end portion (11) of the nozzle tube (10) is radially supported by its inner or outer side on a first tube receptacle (31), which is fastened to one of the two walls, and wherein a second end portion (12) of the nozzle tube (10) is radially supported by its inner or outer side on a second tube receptacle (32), which is fastened to the other of the two walls, **wherein** the length of the nozzle tube (10), as measured on the tube axis (A), is smaller than the distance between the two walls (7, 8), as viewed on the tube axis (A), and is larger than the shortest distance between the tube receptacles (31, 32), wherein the end portions (11, 12) of the nozzle tube (10) and the respective tube receptacle (31, 32) are designed to be displaceable with respect to one another in the direction of the tube axis (A), and with a releasable blocking element (40) for securing the displacement position of the tube nozzle (10), **characterized in that** in order also to secure the rotational position of the nozzle tube (10), a securing portion (60) formed on the blocking element (40) engages in a form-fitting manner in a blocking structure (61) on the respective tube receptacle (31, 32).

2. Dust filter according to Claim 1, **characterized in that** the blocking element (40) is arranged only at one of the two ends of the nozzle tube (10), the blocking element (40) being arranged at that end of the nozzle tube (10) which faces away from the compressed-air supply (14) .

3. Dust filter according to Claim 1, **characterized in that** the securing portion (60) and the blocking structure (61) are located within the nozzle tube (10).

4. Dust filter according to Claim 1 or 3, **characterized in that** the blocking structure (61) is a groove or notch on the end face of the respective tube receptacle (31, 32), said end face facing the nozzle tube (10).

5. Dust filter according to one of Claims 1 - 4, **characterized in that** the blocking element (40) is configured as a spring-elastic clasp, and **in that** the securing portion (60) is a portion of the clasp leading through the nozzle tube (10) transversely with respect to the tube axis (A).

6. Dust filter according to one of Claims 1 to 5, **characterized in that**, in order to secure the displacement position of the nozzle tube (10), the blocking element (40) is fixed with a first engagement region (43) on the end portion (11) of the nozzle tube (10) and is releasably lockable with a second engagement region (44) to the respective tube receptacle (31).

7. Dust filter according to Claim 6, **characterized in that** the blocking element (40) including the engagement regions (43, 44) is configured as a spring-elastic clasp.

8. Dust filter according to Claim 6 or 7, **characterized in that** the first engagement region (43) is fixed in at least one opening (51, 52) in the wall of the nozzle tube (10) and the second engagement region is lockable in a fastening structure (41) formed on the tube receptacle (31) .

9. Dust filter according to one of Claims 6 - 8, **characterized in that** the first engagement region (43) is divided in two, the two parts (43a, 43b) being fixed in different openings (51, 52) in the wall of the nozzle tube (10), and the centre axes of said openings (51, 52) being arranged offset with respect to one another.

10. Dust filter according to Claim 8, **characterized in that** the fastening structure (41) is formed on a longitudinal portion of the tube receptacle (31) that is located between the end face of the nozzle tube (10) and the wall (7).

11. Dust filter according to Claim 8, **characterized in that** the fastening structure (41) is a circumferential groove formed on the tube receptacle (31).

12. Dust filter according to one of the preceding claims, **characterized in that** the first tube receptacle (31) is formed on an insert body (30) which sits in an opening (39) in the wall (7).

13. Dust filter according to Claim 12, **characterized in that** a further tube receptacle (33) for a further nozzle tube (10) is formed on the insert body (30) on that side of the wall (7) which faces away from the first tube receptacle (31), the further tube receptacle (33) being configured in mirror-inverted fashion with respect to the first tube receptacle (31).

14. Dust filter according to Claim 13, **characterized in that** the insert body is composed of the tube receptacles (31, 33) and of a central portion arranged between them, the central portion, for its part, being composed of a cylindrical longitudinal portion (35) sitting in the opening (39) in the wall (7) and of a flange portion (36) supported axially against the wall (7).

## Revendications

1. Filtre à poussière, qui se compose d'éléments filtrants (3) de forme tubulaire agencés dans une chambre de filtration et pourvus d'une ouverture (3A) à une extrémité, et avec un dispositif de nettoyage avec des buses (5) orientées vers les ouvertures (3A) pour délivrer des jets d'air comprimé pulsés dans les éléments filtrants (3), plusieurs buses (5) étant respectivement raccordées à un tube de buses (10) commun, qui peut être relié de manière commandée par soupape à une amenée d'air comprimé (14) et qui s'étend avec son axe de tube (A) entre deux parois (7, 8) du filtre à poussière, une première section d'extrémité (11) du tube de buses (10) étant supportée radialement par son côté intérieur ou extérieur sur un premier logement de tube (31), qui est fixé à l'une des deux parois, et une deuxième section d'extrémité (12) du tube de buses (10) étant supportée radialement par son côté intérieur ou extérieur sur un deuxième logement de tube (32), qui est fixé à l'autre des deux parois, la longueur du tube de buses (10) mesurée sur l'axe de tube (A) étant inférieure à la distance entre les deux parois (7, 8) considérée sur l'axe de tube (A) et supérieure à la distance la plus courte entre les logements de tube (31, 32), les sections d'extrémité (11, 12) du tube de buses (10) et le logement de tube respectif (31, 32) étant réalisés de manière à pouvoir coulisser l'un par rapport à l'autre dans la direction de l'axe de tube (A), et avec un élément de blocage amovible (40) pour sécuriser la position de coulissement du tube de buses (10), **caractérisé en ce que**, pour sécuriser également la position de rotation du tube de buses (10), une section de sécurisation (60) réalisée sur l'élément de blocage (40) s'engage par complémentarité de forme dans une structure de blocage (61) sur le logement de tube respectif (31, 32).

2. Filtre à poussière selon la revendication 1, **caractérisé en ce que** l'élément de blocage (40) n'est agencé qu'à l'une des deux extrémités du tube de buses (10), l'élément de blocage (40) étant agencé à l'extrémité du tube de buses (10) détournée de l'amenée d'air comprimé (14).

3. Filtre à poussière selon la revendication 1, **caractérisé en ce que** la section de sécurisation (60) et la structure de blocage (61) se trouvent à l'intérieur du tube de buses (10).

4. Filtre à poussière selon la revendication 1 ou 3, **caractérisé en ce que** la structure de blocage (61) est une rainure ou une encoche sur le côté frontal du logement de tube respectif (31, 32) tourné vers le tube de buses (10) .

5. Filtre à poussière selon l'une quelconque des revendications 1 à 4, **caractérisé en ce que** l'élément de blocage (40) est conçu sous la forme d'une agrafe élastique, et **en ce que** la section de sécurisation (60) est une section de l'agrafe traversant le tube de buses (10) transversalement à l'axe de tube (A).

6. Filtre à poussière selon l'une quelconque des revendications 1 à 5, **caractérisé en ce que**, pour sécuriser la position de coulissement du tube de buses (10), l'élément de blocage (40) est immobilisé par une première zone d'engagement (43) sur la section d'extrémité (11) du tube de buses (10) et peut être verrouillé de manière amovible par une deuxième zone d'engagement (44) sur le logement de tube respectif (31).

7. Filtre à poussière selon la revendication 6, **caractérisé en ce que** l'élément de blocage (40), y compris les zones d'engagement (43, 44), est conçu sous la forme d'une agrafe élastique.

8. Filtre à poussière selon la revendication 6 ou 7, **caractérisé en ce que** la première zone d'engagement (43) est immobilisée dans au moins une ouverture (51, 52) dans la paroi du tube de buses (10) et la deuxième zone d'engagement peut être verrouillée dans une structure de fixation (41) réalisée sur le logement de tube (31).

9. Filtre à poussière selon l'une quelconque des revendications 6 à 8, **caractérisé en ce que** la première zone d'engagement (43) est divisée en deux, les deux parties (43a, 43b) étant immobilisées dans des ouvertures différentes (51, 52) dans la paroi du tube de buses (10), et les axes centraux de ces ouvertures (51, 52) étant agencés en décalage l'un par rapport à l'autre.

10. Filtre à poussière selon la revendication 8, **caractérisé en ce que** la structure de fixation (41) est réalisée sur une section longitudinale du logement de tube (31) qui se trouve entre le côté frontal du tube de buses (10) et la paroi (7).

11. Filtre à poussière selon la revendication 8, **caractérisé en ce que** la structure de fixation (41) est une rainure circonférentielle réalisée sur le logement de tube (31).

12. Filtre à poussière selon l'une quelconque des revendications précédentes, **caractérisé en ce que** le premier logement de tube (31) est réalisé sur un corps d'insertion (30) qui est repose dans une ouverture (39) dans la paroi (7).

13. Filtre à poussière selon la revendication 12, **caractérisé en ce qu'**un autre logement de tube (33) pour un autre tube de buses (10) est réalisé sur le corps d'insertion (30) sur le côté de la paroi (7) détourné du premier logement de tube (31), l'autre logement de tube (33) étant conçu de manière symétrique par rapport au premier logement de tube (31).

14. Filtre à poussière selon la revendication 13, **caractérisé en ce que** le corps d'insertion se compose des logements de tube (31, 33) et d'une section centrale agencée entre eux, la section centrale se composant elle-même d'une section longitudinale cylindrique (35) reposant dans l'ouverture (39) dans la paroi (7) et d'une section de bride (36) supportée axialement contre la paroi (7).
